# DEMANDE DE BREVET EUROPEEN

(11) **EP 4 624 250 A1**
(43) Date de publication de la demande: **01.10.2025**
(21) Numéro de dépôt: 25165823.3
(22) Date de dépôt: 25.03.2025
(51) Int. Cl.: B60N 2/829, B60N 2/865

(54) **APPUI-TÊTE DE SIÈGE DE VÉHICULE AUTOMOBILE**

(30) Priorité: 26.03.2024 FR 2403057
(71) Demandeur: TESCA France, 92977 Paris La Défense Cedex (FR)
(72) Inventeur: GEORGES, Laurent, 92977 Paris La Défense Cedex (FR); LEFEVRE, Steve, 92977 Paris La Défense Cedex (FR); CHELLILI, Sohaib, 92977 Paris La Défense Cedex (FR)
(74) Mandataire: Sayettat, Julien Christian

(57) **Abrégé**

L'invention concerne un appui-tête (1) de siège de véhicule automobile, comprenant un corps principal (5), un premier dispositif d'actionnement dudit corps principal en coulissement et un circuit intégré (8) de pilotage pourvu de deux bornes d'alimentation (9) connectées chacune à un des fils (3) d'alimentation électrique issus d'une sortie (4), ledit circuit étant fixé sur ledit corps principal, lesdites bornes étant disposées, en vue longitudinale, à l'aplomb de la sortie (4), lesdits fils étant conformables entre une configuration repliée, adoptée quand ledit corps principal est en position de réglage maxi-haute, et une configuration étendue sensiblement rectiligne, adoptée quand ledit corps principal est en position de réglage maxi-basse, de manière à minimiser le volume occupé par lesdits fils dans ladite configuration repliée.

## Description

L'invention concerne un appui-tête de siège de véhicule automobile.

Il est connu de réaliser un appui-tête de siège de véhicule automobile, ledit appui-tête comprenant :
- une armature métallique de montage en haut d'un dossier dudit siège,
- deux fils d'alimentation électrique issus d'une sortie prévue en haut de ladite armature, lesdits fils étant destinés à être reliés à une batterie dudit véhicule,
- un corps principal monté mobile en coulissement vertical sur ladite armature de manière à être réglable en hauteur, ledit corps étant solidaire d'une surface d'appui de la tête d'un occupant dudit siège,
- un premier dispositif d'actionnement dudit corps principal en coulissement, ledit dispositif comprenant un premier motoréducteur,
- un circuit intégré de pilotage dudit motoréducteur, ledit circuit étant pourvu de deux bornes d'alimentation connectées chacune à un desdits fils, ledit circuit comprenant une plaque de support de ses composants électroniques,
- un moyen de commande dudit circuit actionnable par ledit occupant.

On rappelle ici qu'un circuit intégré (CI), aussi appelé puce électronique, est un composant électronique, basé sur un semi-conducteur, reproduisant une ou plusieurs fonctions électroniques plus ou moins complexes, intégrant souvent plusieurs types de composants électroniques de base dans un volume réduit (sur une petite plaque), rendant le circuit facile à mettre en œuvre.

Par ailleurs, dans toute la description, on entend par l'appellation « circuit intégré de pilotage du motoréducteur » un circuit permettant de gérer des fonctions complexes, non limitées à une simple fonction d'interrupteur « marche/arrêt ».

De telles fonctions complexes, pouvant être combinées entre elles, sont par exemple :
- un actionnement du motoréducteur par au moins un capteur, détectant par exemple la pression ou la simple présence d'un doigt d'utilisateur, ledit capteur pouvant être intégré à un support rigide (par exemple en matériau plastique moulé) ou souple (par exemple une coiffe en textile),
- une connaissance de la position du/des corps en temps réel,
- une capacité de mémorisation d'au moins une position de réglage par l'utilisateur, afin de lui permettre un réglage automatique de l'appui-tête,
- une mémorisation des butées physiques de fin de course du/des corps, afin de permettre un arrêt de leur mouvement un peu avant l'atteinte desdites butées (notion de « butées virtuelles »),
- une mémorisation de la position du/des corps en temps réel,
- une mémorisation permanente des différents éléments mémorisés, même après coupure du courant (notamment quand le moteur du véhicule est à l'arrêt),
- un pilotage de la vitesse du motoréducteur en fonction de la position du/des corps (permettant notamment leur ralentissement à l'approche d'une « butée virtuelle »).

Avec l'agencement connu se pose le problème, notamment quand l'appui-tête est de faible volume, de disposer de suffisamment d'espace pour loger les fils, notamment lorsqu'ils sont en configuration repliée, afin de ne pas entraver le réglage du corps principal.

L'invention a pour but de proposer un agencement permettant de résoudre ce problème.

A cet effet, l'invention propose un appui-tête de siège de véhicule automobile, ledit appui-tête comprenant :
- une armature métallique de montage en haut d'un dossier dudit siège,
- deux fils d'alimentation électrique issus d'une sortie prévue en haut de ladite armature, lesdits fils étant destinés à être reliés à une batterie dudit véhicule,
- un corps principal monté mobile en coulissement vertical sur ladite armature de manière à être réglable en hauteur, ledit corps étant solidaire d'une surface d'appui de la tête d'un occupant dudit siège,
- un premier dispositif d'actionnement dudit corps principal en coulissement, ledit dispositif comprenant un premier motoréducteur,
- un circuit intégré de pilotage dudit motoréducteur, ledit circuit étant pourvu de deux bornes d'alimentation connectées chacune à un desdits fils, ledit circuit comprenant une plaque de support de ses composants électroniques,
- un moyen de commande dudit circuit actionnable par ledit occupant,
ledit appui-tête présentant en outre les caractéristiques suivantes :
- ledit circuit est fixé sur ledit corps principal,
- lesdites bornes sont disposées, en vue longitudinale, à l'aplomb de ladite sortie, de manière à minimiser la longueur desdits fils,
- lesdits fils sont conformables entre une configuration repliée, adoptée quand ledit corps principal est en position de réglage maxi-haute, et une configuration étendue sensiblement rectiligne, adoptée quand ledit corps principal est en position de réglage maxi-basse, de manière à minimiser le volume occupé par lesdits fils dans ladite configuration repliée.

On précise ici que, dans cette description, les termes de positionnement dans l'espace (haut, bas, supérieur, inférieur, longitudinal, transversal, latéral, avant, arrière, vertical, horizontal, ...) sont pris en référence à l'appui-tête disposé dans le véhicule en situation d'utilisation, ledit véhicule s'étendant longitudinalement selon sa longueur (axe X), transversalement selon sa largeur (axe Y) et verticalement selon sa hauteur (axe Z).

Avec l'agencement proposé, la longueur des fils est minimisée, ce qui permet de disposer de suffisamment d'espace pour loger lesdits fils afin de ne pas entraver le réglage du corps principal.

En outre, la fixation du circuit intégré sur le corps principal correspond au meilleur compromis pour minimiser non seulement la longueur des fils d'alimentation dudit circuit, mais également celle des fils issus du moyen de commande et de ceux alimentant le/les motoréducteur/s.

D'autres particularités et avantages de l'invention apparaîtront dans la description qui suit, faite en référence aux figures jointes, dans lesquelles :
[Fig.1] est une vue schématique en perspective partielle d'un appui-tête selon une première réalisation mécanique où il comprend seulement un corps principal, les fils étant en configuration étendue,
[Fig.2a] et
[Fig.2b] sont des vues schématiques en vue transversale de l'appui-tête de la figure 1, les fils étant en configuration étendue (figure 2a) et en configuration repliée (figure 2b),
[Fig.3] est une vue schématique en perspective partielle d'un appui-tête selon une deuxième réalisation mécanique où il comprend un corps principal et un corps secondaire, les fils étant en configuration étendue,

En référence aux figures, on décrit un appui-tête 1 de siège de véhicule automobile, ledit appui-tête comprenant :
- une armature 2 métallique de montage en haut d'un dossier dudit siège,
- deux fils 3 d'alimentation électrique issus d'une sortie 4 prévue en haut de ladite armature, lesdits fils étant destinés à être reliés à une batterie dudit véhicule,
- un corps principal 5 - notamment en matériau plastique moulé - monté mobile en coulissement vertical sur ladite armature de manière à être réglable en hauteur, ledit corps étant solidaire d'une surface d'appui 6 de la tête d'un occupant dudit siège,
- un premier dispositif d'actionnement dudit corps principal en coulissement, ledit dispositif comprenant un premier motoréducteur 7,
- un circuit intégré 8 de pilotage dudit motoréducteur, ledit circuit étant pourvu de deux bornes d'alimentation 9 connectées chacune à un desdits fils, ledit circuit comprenant une plaque de support 10 de ses composants électroniques,
- un moyen de commande - non représenté, par exemple tactile comme décrit plus loin, ou encore auditif - dudit circuit actionnable par ledit occupant,
ledit appui-tête présentant en outre les caractéristiques suivantes :
- ledit circuit est fixé sur ledit corps principal,
- lesdites bornes sont disposées, en vue longitudinale, à l'aplomb de ladite sortie, de manière à minimiser la longueur desdits fils,
- lesdits fils sont conformables entre une configuration repliée, adoptée quand ledit corps principal est en position de réglage maxi-haute, et une configuration étendue sensiblement rectiligne, adoptée quand ledit corps principal est en position de réglage maxi-basse, de manière à minimiser le volume occupé par lesdits fils dans ladite configuration repliée.

Selon les réalisations représentées, les fils 3 sont disposés dans une gaine 11 commune.

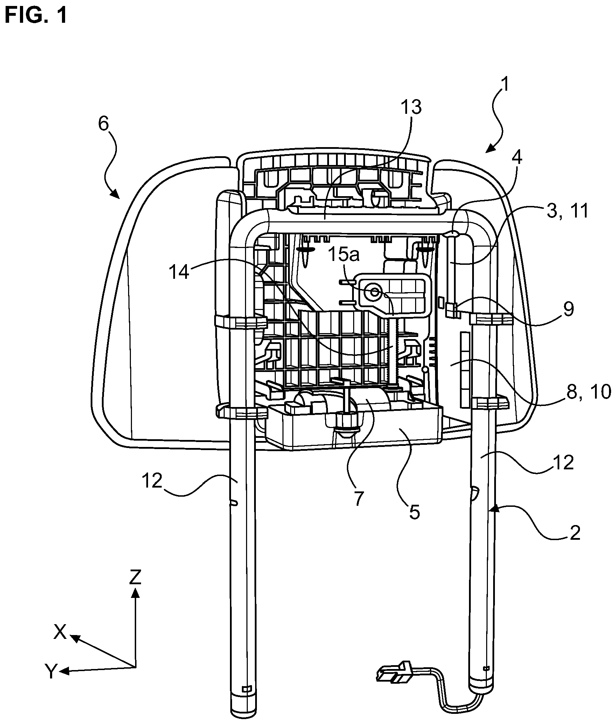

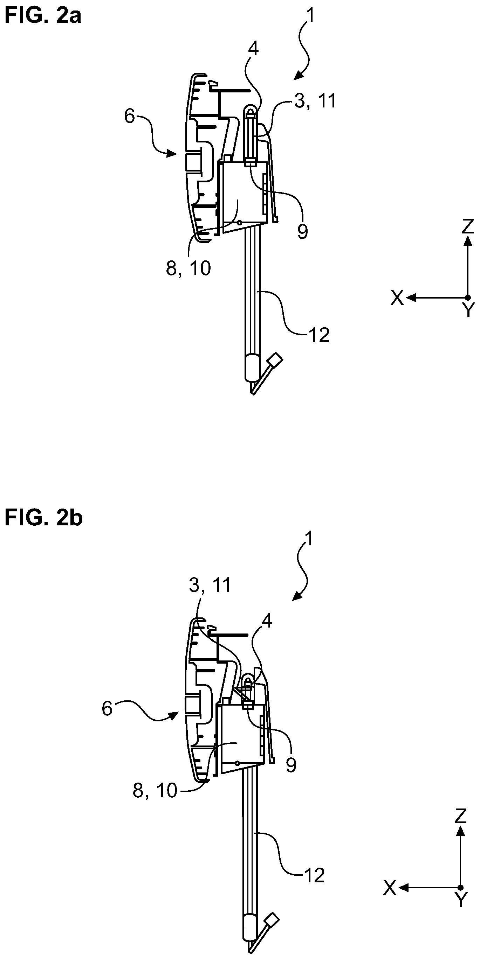

Selon une première réalisation mécanique représentée en figures 1 et 2 :
- l'appui-tête comprend uniquement un corps principal 5,
- la plaque 10 du circuit 8 est montée latéralement et s'étend selon un plan vertical longitudinal,
- les bornes d'alimentation 9 - notamment en forme de L pour éviter un retour des fils 3 - sont disposées en haut de ladite plaque.

Selon cette première réalisation :
- l'armature 2 comprend deux branches 12 parallèles s'étendant verticalement et une entretoise 13 transversale reliant les extrémités supérieures desdites branches entre elles,
- le premier motoréducteur 7 est monté sur le corps principal 5,
- le premier dispositif d'actionnement comprend en outre une première tige 14 filetée actionnée en rotation par ledit premier motoréducteur, ladite tige s'étendant vers le haut et coopérant en vissage avec un écrou 15a monté de façon décalée vers le bas sur ladite entretoise, de sorte que ladite tige ne soit pas saillante vers le haut de ladite entretoise quand ledit corps principal est réglé en position maxi-haute.

Selon cette première réalisation, l'armature 2 est sous forme d'un tube métallique replié de manière à présenter en vue longitudinale une forme générale en U renversé, l'entretoise 13 étant formée par la partie médiane du U et les branches 12 par celles du U.

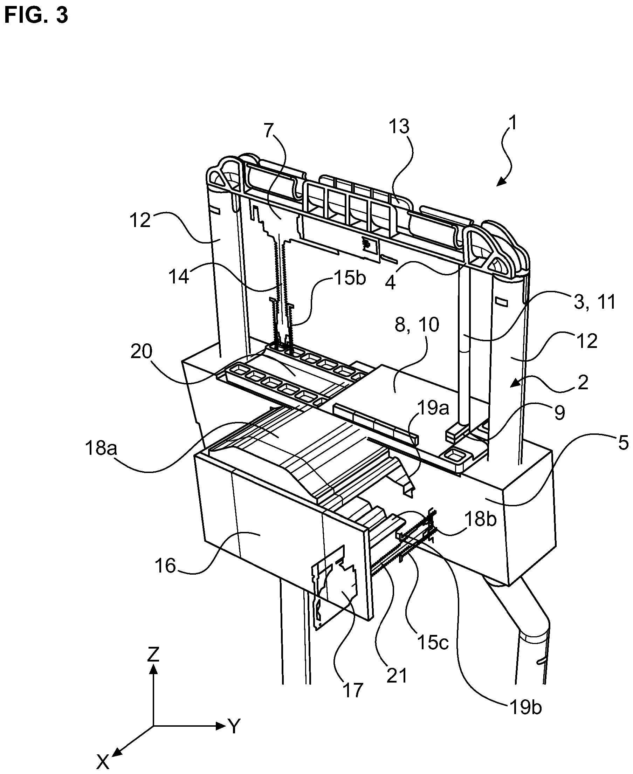

Selon une deuxième réalisation mécanique représentée en figure 3 :
- l'appui-tête comprend en outre un corps secondaire 16 - notamment en matériau plastique moulé - monté en coulissement longitudinal sur le corps principal 5, de manière à pouvoir être réglé selon une direction longitudinale, ledit corps secondaire étant actionné en coulissement par un deuxième dispositif d'actionnement comprenant un deuxième motoréducteur 17,
- ledit corps secondaire est pourvu de deux tenons supérieur 18a et inférieur 18b s'étendant longitudinalement et présentant en vue longitudinale une forme s'inscrivant dans un trapèze, ledit trapèze présentant une grande base tournée vers l'intérieur et une petite base tournée vers l'extérieur,
- lesdits tenons coulissent dans deux mortaises supérieure 19a et inférieure 19b respectives prévues dans ledit corps principal, lesdites mortaises débouchant par ladite petite base vers l'extérieur, de manière à former un assemblage par « queues d'aronde »,
ledit appui-tête comprenant en outre un circuit intégré 8 commun pilotant les premier 7 et deuxième 17 motoréducteurs, la plaque 10 dudit circuit étant montée sur un élément de renfort 20 de ladite mortaise supérieure, ledit élément étant monté transversalement de part et d'autre de ladite mortaise de manière à la refermer par le dessus, ladite plaque s'étendant selon un plan sensiblement horizontal.

Un tel positionnement du circuit intégré 8 est dicté par des considérations d'encombrement ne permettant pas de le fixer selon le mode prévu dans la première réalisation, ledit circuit étant alors disposé au plus proche de la sortie 4.

Il est à noter que, selon cette deuxième réalisation, le corps principal 5 est solidaire de la surface d'appui 6 de la tête d'un occupant du siège par l'intermédiaire du corps secondaire 16, et non plus directement comme c'était le cas dans la première réalisation.

Selon cette deuxième réalisation :
- l'armature 2 comprend deux branches 12 parallèles s'étendant verticalement et une entretoise 13 transversale reliant les extrémités supérieures desdites branches entre elles,
- le premier motoréducteur 7 est monté sur ladite entretoise,
- le premier dispositif d'actionnement comprend en outre une première tige 14 filetée actionnée en rotation par ledit premier motoréducteur, ladite première tige s'étendant vers le bas et coopérant en vissage avec un écrou 15b monté sur le corps principal de manière à permettre son réglage en hauteur.

Selon cette deuxième réalisation, l'armature 2 comprend deux tubes métalliques formant les branches 12 et une entretoise 13, à base de matériau plastique moulé, reliée aux extrémités supérieures desdits tubes.

Selon cette deuxième réalisation :
- le deuxième motoréducteur 17 est fixé à l'avant du corps secondaire 16,
- le deuxième dispositif d'actionnement comprend en outre une deuxième tige filetée 21 actionnée en rotation par ledit deuxième motoréducteur, ladite deuxième tige s'étendant en arrière dudit deuxième motoréducteur et coopérant en vissage avec un écrou 15c monté sur le corps principal 5 de manière à permettre le réglage longitudinal du corps secondaire 16.

Selon un mode de réalisation non représenté, applicable à toutes les réalisations mécaniques couvertes par l'invention, le moyen commande peut se présenter sous forme d'une plaque tactile permettant un actionnement du corps principal 5 - et du corps secondaire 16 le cas échéant - dans un sens ou dans l'autre selon la zone de ladite plaque où est exercé un appui par l'occupant du siège ; on peut également prévoir une mémorisation de positions par un appui exercé de façon prolongée sur ladite plaque par ledit occupant.

Selon un mode de réalisation non représenté, applicable à toutes les réalisations mécaniques couvertes par l'invention, la plaque 10 du circuit intégré 8 peut s'insérer par un de ses bords dans une fente prévue dans le corps principal 5, une bordure opposée de ladite plaque étant associée par une vis audit corps principal, ce qui simplifie sa fixation.

Selon un mode de réalisation applicable à toutes les réalisations mécaniques couvertes par l'invention, qu'elles mettent en œuvre seulement un corps principal 5 ou bien un corps principal 5 et un corps secondaire 16, le circuit intégré 8 comprend :
- une mémoire vive ferroélectrique non volatile (usuellement dénommée FRAM) de sauvegarde des données de réglage d'au moins un corps 5,16,
- un condensateur (par exemple de capacité de l'ordre de 10⁻³ F) permettant un stockage d'énergie électrique afin de permettre une restitution d'énergie en cas de coupure de courant et permettre ladite sauvegarde.

Selon autre mode de réalisation applicable à toutes les réalisations mécaniques mettant en œuvre un corps principal 5 et un corps secondaire 16, le circuit intégré 8 comprend un pilote de moteur permettant de piloter deux motoréducteurs 7,17.

## Revendications

1. Appui-tête (1) de siège de véhicule automobile, ledit appui-tête comprenant :
• une armature (2) métallique de montage en haut d'un dossier dudit siège,
• deux fils (3) d'alimentation électrique issus d'une sortie (4) prévue en haut de ladite armature, lesdits fils étant destinés à être reliés à une batterie dudit véhicule,
• un corps principal (5) monté mobile en coulissement vertical sur ladite armature de manière à être réglable en hauteur, ledit corps étant solidaire d'une surface d'appui (6) de la tête d'un occupant dudit siège,
• un premier dispositif d'actionnement dudit corps principal en coulissement, ledit dispositif comprenant un premier motoréducteur (7),
• un circuit intégré (8) de pilotage dudit motoréducteur, ledit circuit étant pourvu de deux bornes d'alimentation (9) connectées chacune à un desdits fils, ledit circuit comprenant une plaque (10) de support de ses composants électroniques,
• un moyen de commande dudit circuit actionnable par ledit occupant,
ledit appui-tête étant **caractérisé en ce que** :
• ledit circuit est fixé sur ledit corps principal,
• lesdites bornes sont disposées, en vue longitudinale, à l'aplomb de ladite sortie, de manière à minimiser la longueur desdits fils,
• lesdits fils sont conformables entre une configuration repliée, adoptée quand ledit corps principal est en position de réglage maxi-haute, et une configuration étendue sensiblement rectiligne, adoptée quand ledit corps principal est en position de réglage maxi-basse, de manière à minimiser le volume occupé par lesdits fils dans ladite configuration repliée.

2. Appui-tête (1) selon la revendication 1, **caractérisé en ce que** les fils (3) sont disposé dans une gaine (11) commune.

3. Appui-tête (1) selon l'une des revendications 1 ou 2, **caractérisé en ce que** :
• il comprend uniquement un corps principal (5),
• la plaque (10) du circuit (8) est montée latéralement et s'étend selon un plan vertical longitudinal,
• les bornes d'alimentation (9) sont disposées en haut de ladite plaque.

4. Appui-tête (1) selon la revendication précédente, **caractérisé en ce que** :
• l'armature (2) comprend deux branches (12) parallèles s'étendant verticalement et une entretoise (13) transversale reliant les extrémités supérieures desdites branches entre elles,
• le premier motoréducteur (7) est monté sur le corps principal (5),
• le premier dispositif d'actionnement comprend en outre une première tige (14) filetée actionnée en rotation par ledit premier motoréducteur, ladite tige s'étendant vers le haut et coopérant en vissage avec un écrou (15a) monté de façon décalée vers le bas sur ladite entretoise, de sorte que ladite tige ne soit pas saillante vers le haut de ladite entretoise quand ledit corps principal est réglé en position maxi-haute.

5. Appui-tête (1) selon l'une des revendications 1 ou 2, **caractérisé en ce que** :
• il comprend en outre un corps secondaire (16) monté en coulissement longitudinal sur le corps principal (5), de manière à pouvoir être réglé selon une direction longitudinale, ledit corps secondaire étant actionné en coulissement par un deuxième dispositif d'actionnement comprenant un deuxième motoréducteur (17),
• ledit corps secondaire est pourvu de deux tenons supérieur (18a) et inférieur (18b) s'étendant longitudinalement et présentant en vue longitudinale une forme s'inscrivant dans un trapèze, ledit trapèze présentant une grande base tournée vers l'intérieur et une petite base tournée vers l'extérieur,
• lesdits tenons coulissent dans deux mortaises supérieure (19a) et inférieure (19b) respectives prévues dans ledit corps principal, lesdites mortaises débouchant par ladite petite base vers l'extérieur, de manière à former un assemblage par « queues d'aronde »,
ledit appui-tête comprenant en outre un circuit intégré (8) commun pilotant les premier (7) et deuxième (17) motoréducteurs, la plaque (10) dudit circuit étant montée sur un élément de renfort (20) de ladite mortaise supérieure, ledit élément étant monté transversalement de part et d'autre de ladite mortaise de manière à la refermer par le dessus, ladite plaque s'étendant selon un plan sensiblement horizontal.

6. Appui-tête (1) selon la revendication précédente, **caractérisé en ce que** :
• l'armature (2) comprend deux branches (12) parallèles s'étendant verticalement et une entretoise (13) transversale reliant les extrémités supérieures desdites branches entre elles,
• le premier motoréducteur (7) est monté sur ladite entretoise,
• le premier dispositif d'actionnement comprend en outre une première tige (14) filetée actionnée en rotation par ledit premier motoréducteur, ladite première tige s'étendant vers le bas et coopérant en vissage avec un écrou (15b) monté sur le corps principal (5) de manière à permettre son réglage en hauteur.

7. Appui-tête (1) selon l'une des revendications 5 ou 6, **caractérisé en ce que** :
• le deuxième motoréducteur (17) est fixé à l'avant du corps secondaire (16),
• le deuxième dispositif d'actionnement comprend en outre une deuxième tige filetée (21) actionnée en rotation par ledit deuxième motoréducteur, ladite deuxième tige s'étendant en arrière dudit deuxième motoréducteur et coopérant en vissage avec un écrou (15c) monté sur le corps principal (5) de manière à permettre le réglage longitudinal du corps secondaire (16).

8. Appui-tête (1) selon l'une quelconque des revendications précédentes, **caractérisé en ce que** la plaque (10) du circuit intégré (8) s'insère par un de ses bords dans une fente prévue dans le corps principal (5), une bordure opposée de ladite plaque étant associée par une vis audit corps principal.

9. Appui-tête (1) selon l'une quelconque des revendications précédentes, **caractérisé en ce que** le circuit intégré (8) comprend :
• une mémoire vive ferroélectrique non volatile de sauvegarde des données de réglage d'au moins un corps (5,16),
• un condensateur permettant un stockage d'énergie électrique afin de permettre une restitution d'énergie en cas de coupure de courant et permettre ladite sauvegarde.

10. Appui-tête (1) selon l'une quelconque des revendications précédentes, quand elle se rattache à la revendication 5, **caractérisé en ce que** le circuit intégré (8) comprend un pilote de moteur permettant de piloter deux motoréducteurs (5,16).
